# EUROPÄISCHE PATENTSCHRIFT

(11) **EP 1 211 043 B1**
(45) Veröffentlichungstag und Bekanntmachung des Hinweises auf die Patenterteilung: **03.09.2003**
(21) Anmeldenummer: 01124928.1
(22) Anmeldetag: 19.10.2001
(51) Int. Cl.: B29C 45/50

(54) **Verfahren zum Betreiben eines Einspritzaggregates für eine Spritzgiessmaschine**
Method for the operation of an injection unit for an injection moulding machine
Méthode d'utilisation d'une unité d'injection d'une machine à moulage par injection

(30) Priorität: 02.12.2000 DE 10060086
(43) Veröffentlichungstag der Anmeldung: 05.06.2002
(73) Patentinhaber: Battenfeld GmbH, D-58540 Meinerzhagen (DE)
(72) Erfinder: Bleier, Harald, Ing., 2700 Wiener Neustadt (AT)

(56) Entgegenhaltungen:
- EP-A- 0 662 382
- EP-A- 1 083 036
- DE-C- 19 819 809
- DATABASE WPI Week 8610 Derwent Publications Ltd., London, GB; AN 1986-065383 XP002188073 -& JP 61 016826 A (JAPAN STEEL WORKS LTD), 24. Januar 1986 (1986-01-24)

## Beschreibung

Die Erfindung betrifft ein Verfahren zum Betreiben eines Einspritzaggregates einer Spritzgießmaschine zum Dosieren oder Einspritzen von vorzugsweise thermoplastischem Material, sowie zur Erzeugung eines Staudruckes in der Schmelze oder zur Erzeugung eines Nachdruckes auf die Schmelze.

Verfahren der gattungsgemäßen Art sind allgemein bekannt. Zum Erzeugen eines Teiles aus thermoplastischem Material wird in einer Spritzgießmaschine granulierter Kunststoff plastifiziert, in einen Schneckenvorraum dosiert und ein Staudruck in der Schmelze aufgebaut. Im allgemeinen wird durch axiale Verschiebung der Schnecke die Schmelze in eine Werkzeugkavität eingespritzt und der Schmelzedruck gehalten, also ein Nachdruck aufgebaut, um die naturgemäße Materialschwindung auszugleichen. In der **EP-A- 662 382** wird zum Beispiel ein Einspritzaggregat beschrieben, das über Elektromotore betrieben wird und ebenfalls den oben beschriebenen Spritzgießvorgang ermöglicht. Hier wird jedoch der Staudruck in der Schmelze über eine zusätzliche hydraulische Vorrichtung erzeugt. Die nachveröffentlichte **EP-A- 1 083 036** zeigt eine Spindel mit unterschiedlichen Gewinden und zwei Muttern und zwei dazugehörigen Antriebsmotoren. Um den Einspritzvorgang einzuleiten ist es erforderlich, beide Motore mit der gleichen Drehzahl zu betreiben, wobei dies überwacht wird.

Nachteilig bei den bekannten Verfahren dieser elektrischen Spritzgießmaschinen ist, daß für die Erzeugung und Regelung des Staudruckes unter anderem ein eigenständiges hydraulisches System verwendet wird, welches durch seine Komplexität zwangsläufig mit hohen Kosten verbunden ist. Durch die Verwendung des elektrischen Direktantriebs, wo die Mutter integraler Bestandteil eines Motors ist, ist in Bezug auf die Kühlung, Wartung (Schmierung) sowie Servicearbeiten dieses System als nachteilig anzusehen. Die Erfindung offenbart auch, daß während des Einspritzens sowie während des Nachdruckes ein Motor (Dosiermotor) positionsgehalten wird (Drehzahl 0). Daraus ergibt sich eine relativ hohe Strombelastung für die elektronischen Leistungsteile über den Einspritzzeitraum, welches zu einer Temperaturerhöhung über die zulässigen Werte hinaus führen kann, wenn nicht vorzeitig der Strom abgesenkt wird. Durch diesen Umstand wird die Leistungsfähigkeit der Maschine für die Verwendung im Elastomerbereich stark eingeschränkt, wo extrem lange Einspritz- und Nachdruckzeiten benötigt werden.

Die Erfindung stellt sich daher die Aufgabe, ein Verfahren zum Betreiben eines Einspritzaggregates bereitzustellen, das über die beiden Elektromotore alle erforderlichen Spritzgießvorgänge ermöglicht und keine zusätzliche hydraulische Vorrichtung erfordert, wobei eine übermäßige Belastung der Motore bzw. deren elektrischer Bauteile ausgeschlossen ist.

Die Lösung der Aufgabe wird mittels eines aus zwei in elektrischer Regelverbindung stehenden Elektromotoren und einer Spindel-Mutternkombination bestehenden Schneckenantriebes, wobei die beiden Elektromotore gleichzeitig in der selben oder einer gegenläufigen Drehrichtung betrieben werden können, wobei die beiden Elektromotore, vorzugsweise Servomotore, zum Einspritzen des thermoplastischen Materials in ihrer Drehrichtung gegenläufig betrieben werden, oder die beiden Elektromotore zur Erzeugung eines Staudruckes in der Schmelze oder eines Nachdruckes auf die Schmelze in ihrer Drehrichtung gleichläufig betrieben werden, wobei mittels mindestens eines elektrischen Feedbacksignals eine Differenzdrehzahl eingestellt wird, um die beiden Motore zueinander abzustimmen, wobei als zusätzliches Feedbacksignal ein Linear-Wegmeßsystem zum Einsatz kommt, erreicht.

Bei gleichen Verlusten, z.B. Reibung, ist die Differenzdrehzahl gleich null (0).

Durch den gegenläufigen Betrieb der beiden Elektromotore wird bewirkt, daß die Spindel-Mutternkombination zur Wirkung gebracht wird und durch die Relativbewegung von Spindel zur Mutter die Schnecke axial verschoben wird. Über die Drehzahldifferenz der beiden Elektromotore kann die Einspritzgeschwindigkeit gesteuert und/oder geregelt werden. Je höher der Drehzahlunterschied gewählt wird, desto höher ist der axiale Vorschub und somit die Einspritzgeschwindigkeit. Werden die beiden Elektromotore in ihrer Drehrichtung gleichläufig betrieben, also die Relativbewegung in der Spindel-Mutternkombination ausgeschlossen, wird die Schnecke nicht axial verschoben. Da die Schnecke aber weiterhin rotiert, wird nach wie vor thermoplastisches Material gefördert und somit im Schneckenvorraum ein Staudruck in der Schmelze, wie dies beim Dosieren erforderlich ist, oder ein Nachdruck auf die Schmelze in der Kavität erzeugt. Sofern eine Differenzdrehzahl erforderlich ist, wird diese über das elektrische Feedbacksignal eingestellt. Es wird somit sichergestellt, daß beispielsweise beim Dosiervorgang die Schnecke eine Axialbewegung ausführt. Über diese Feedbacksignale kann ebenfalls realisiert werden, jeden Verfahrensschritt nach einem vorbestimmten Profil ablaufen zu lassen. Dies könnte beispielsweise eine Erhöhung des Nachdruckes in Abhängigkeit von der Abkühlzeit sein, aber auch jedes weitere Regelprofil ist hier denkbar.

Vorteilhafterweise wird als Feedbacksignal ein Druck oder eine Geschwindigkeit oder eine Beschleunigung eingesetzt. Als Druck kann beispielsweise der Massedruck der Schmelze im Schneckenzylinder, der direkt oder indirekt über eine Kraftmeßdose ermittelt wird, herangezogen werden. Auch die Kombination der angeführten Feedbacksignale wird angewendet, um ein optimales von Zyklus zu Zyklus reproduzierbares Produktionsergebnis zu erhalten.

Beim Einsatz eines Linear-Wegmeßsystem als zusätzliches Feedbacksignal wird zum Beispiel die Position der Schnecken ermittelt. Dies hat insbesondere den Vorteil, daß es nicht mehr erforderlich ist, vor dem eigentlichen Prozeßbeginn einen Nullpunkt zu ermitteln, also eine Referenzierung durchzuführen, da die Veränderungen relativ zueinander bestimmbar sind und nicht mehr die absoluten Größen erforderlich macht.

Das oder die Feedbacksignale werden mittels mindestens einer programmierbaren Steuerung verarbeitet.

Weiterbildungsgemäß ist vorgesehen, daß die beiden Elektromotore in ihrer Drehrichtung beim Dosieren des thermoplastischen Materials umgekehrt zur Drehrichtung beim Erzeugen des Nachdruckes auf die Schmelze betrieben werden. Wie bereits oben beschrieben ist beim Dosieren der Schmelze bzw. beim Aufbringen des Nachdrucks auf die Schmelze erfindungsgemäß eine axiale Bewegung der Schnecke ausgeschlossen, solange keine durch ein Feedbacksignal hervorgerufene Differenzdrehzahl zwischen den beiden Elektromotoren eingestellt wird. Durch das Drehen der Schnecke ist allerdings weiterhin sichergestellt, daß die elektrischen Bauteile der Elektromotore vor Überlastung geschützt sind. Bei der Erzeugung des Nachdrucks auf die Schmelze sind höhere Kräfte oder Momente erforderlich, die bei elektrischen Spritzgießmaschinen mit hohen Strömen erzeugt werden. Geschieht dies bei Stillstand der Motore, führt dies zu Widerstandsverlusten, die wiederum in Wärme umgewandelt werden. Eine Temperaturerhöhung der Bauteile, insbesondere der Transistoren, führt zu deren Schädigung und folglich zur Verkürzung der Standzeit der Maschine. Wird allerdings, wie in der Erfindung vorgeschlagen, der gewünschte Effekt - keine axiale Bewegung der Schnecke - erreicht, obwohl die Motore drehen, kann die über den Strom erzeugte Kraft oder das Moment in eine Drehbewegung umgesetzt werden, eine unerwünschte Temperaturerhöhung findet nicht statt. Die Bondierung wird somit nicht durch thermische Zyklen belastet. Mit dieser Problematik setzt sich auch die **DE-C- 198 19 809** auseinander. Das Verfahren kann auch gekennzeichnet sein durch ein Umkehren der Drehrichtung der Schnecke beim Einspritzvorgang zur Drehrichtung der Schnecke beim Dosiervorgang. Hierdurch wird erreicht, daß insbesondere beim Nachdruck kein thermoplastisches Material in Plastifizierrichtung gefördert wird und somit eine zu hohe Verweilzeit im Schneckenzylinder und damit eine thermische Schädigung des Materials auftreten kann. Im Gegenteil, das Material in den Schneckengängen wird zurückgefördert.

Weiterbildungsgemäß ist vorgesehen, daß mindestens ein elektrisches Signal ausgegeben wird, um ein schaltbares Element zwischen der Schnecke und der Spindeln-Mutternkombination zu betätigen. Als schaltbares Element kann beispielsweise eine Kupplung vorgesehen sein, die das Drehen der Schnecke nach dem Dosiervorgang unterbindet, da eine Momentenübertragung verhindert werden kann. Das Problem der thermischen Belastung in den Bauteilen der Motore tritt nicht auf, da diese weiterhin drehen können.

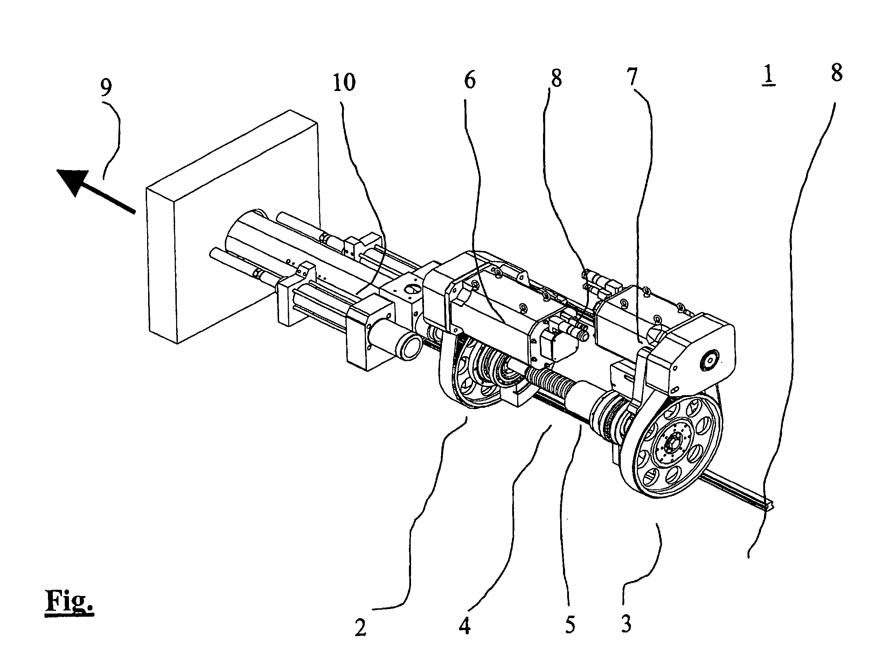

In der Zeichnung ist ein Ausführungsbeispiel der Erfindung dargestellt. Die Figur zeigt ein Einspritzaggregat 1 zum Betreiben einer Plastifizierund Einspritzschnecke 10. Über das Riemenrad 2 in Verbindung mit dem Servomotor 6 wird mittels eines Zahnriemens die Schnecke 10 gedreht. Am Riemenrad 2 ist eine Spindel 4 angeordnet, die mit einer Spindelmutter 5 in Verbindung steht, die wiederum an einem Riemenrad 3 angeordnet ist, das über den Servomotor 7 durch einen Zahnriemen angetrieben wird. Um nun eine axiale Bewegung der Schnecke zu verhindern ist es erforderlich, die über das Riemenrad 2 erzeugte Verdrehung der Spindel 4 durch Mitdrehen der Spindelmutter 5 auszugleichen, was durch exakte Abstimmung der Drehzahl der Servomotore 6 und 7 über eine programmierbare Steuerung möglich ist. Eine axiale Bewegung der Schnecke 10 wird durch eine Drehzahldifferenz zwischen den beiden Servomotoren 6 und 7 erreicht. Die Spindel-Mutternkombination 4/5 kommt zum Eingriff, der Abstand zwischen den Riemenrädern 2 und 3 verringert sich und verschiebt somit die Schnecke 10 axial in die Plastifizierrichtung 9. Die Abstützung des Einspritzaggregates erfolgt an einer nicht dargestellten Traverse, die Motor/Riemenrad-Kombination verfährt entlang der Führung 8.

### Bezugszeichenliste:

- 1: Einspritzaggregat
- 2: erstes Riemenrad
- 3: zweites Riemenrad
- 4: Spindel
- 5: Spindelmutter
- 6: Motor für erstes Riemenrad 2
- 7: Motor für zweites Riemenrad 3
- 8: Führung für Riemenrad und Motor
- 9: Plastifizierrichtung
- 10: Teile einer Plastifizier- und Einspritzschnecke

## Patentansprüche

1. Verfahren zum Betreiben eines Einspritzaggregates (1) einer Spritzgießmaschine zum Dosieren oder Einspritzen von vorzugsweise thermoplastischem Material,
sowie zur Erzeugung eines Staudruckes in der Schmelze oder zur Erzeugung eines Nachdruckes auf die Schmelze,
mittels eines aus zwei in elektrischer Regelverbindung stehenden Elektromotoren (6, 7) und einer Spindel-Mutternkombination (4, 5) bestehenden Schneckenantriebes,
wobei die beiden Elektromotore (6, 7) gleichzeitig in der selben oder einer gegenläufigen Drehrichtung betrieben werden können,
wobei die beiden Elektromotore (6, 7), vorzugsweise Servomotore, zum Einspritzen des thermoplastischen Materials in ihrer Drehrichtung gegenläufig betrieben werden, oder
die beiden Elektromotore (6, 7) zur Erzeugung eines Staudruckes in der Schmelze oder eines Nachdruckes auf die Schmelze in ihrer Drehrichtung gleichläufig betrieben werden,
wobei mittels mindestens eines elektrischen Feedbacksignals eine Differenzdrehzahl eingestellt wird,
wobei ein Linear-Wegmeßsystem als zusätzliches Feedbacksignal verwendet wird.

2. Verfahren nach Anspruch 1, **dadurch gekennzeichnet, daß** als Feedbacksignal ein Druck oder eine Geschwindigkeit oder eine Beschleunigung eingesetzt wird.

3. Verfahren nach einem der Ansprüche 1 oder 2 , **dadurch gekennzeichnet, daß** das oder die Feedbacksignale mittels mindestens einer programmierbaren Steuerung verarbeitet werden.

4. Verfahren nach einem der Ansprüche 1 bis 3, **dadurch gekennzeichnet, daß** die beiden Elektromotore (6, 7) in ihrer Drehrichtung beim Dosieren des thermoplastischen Materials umgekehrt zur Drehrichtung beim Erzeugen des Nachdruckes auf die Schmelze betrieben werden.

5. Verfahren nach einem der Ansprüche 1 bis 4, **dadurch gekennzeichnet, daß** die Drehrichtung der Schnecke (10) beim Einspritzvorgang umgekehrt zur Drehrichtung der Schnecke (10) beim Dosiervorgang ist.

6. Verfahren nach mindestens einem der Ansprüche 1 bis 5, **dadurch gekennzeichnet, daß** mindestens ein elektrisches Signal ausgegeben wird, um ein schaltbares Element zwischen der Schnecke (10) und der Spindeln-Mutternkombination (4, 5) zu betätigen.

## Claims

1. Process for operating an injection unit (1) of an injection-moulding machine for metering or injection of preferably thermoplastic material, as well as for producing a back pressure in the melt or for producing a dwell pressure on the melt, by means of a screw drive consisting of two electromotors (6, 7) in electrical control connection and a spindle-nut combination (4, 5), wherein the two electromotors (6, 7) may be operated at the same time in the same or an opposite direction of rotation, wherein the two electromotors (6, 7), preferably servomotors, are operated in opposite direction of rotation for injection of the thermoplastic material, or the two electromotors (6, 7) are operated in the same direction of rotation for producing a back pressure in the melt or a dwell pressure on the melt, wherein a differential speed is set by means of at least one electrical feedback signal, wherein a linear path-measuring system is used as an additional feedback signal.

2. Process according to claim 1, **characterised in that** a pressure or a speed or an acceleration is used as a feedback signal.

3. Process according to one of claims 1 or 2, **characterised in that** the feedback signal or signals are processed by means of at least one programmable control.

4. Process according to one of claims 1 to 3, **characterised in that** the two electromotors (6, 7) are operated in opposite direction of rotation during metering of the thermoplastic material to the direction of rotation during production of the dwell pressure on the melt

5. Process according to one of claims 1 to 4, **characterised in that** the direction of rotation of the screw (10) during the injection process is opposite to the direction of rotation of the screw (10) during the metering process.

6. Process according to at least one of claims 1 to 5, **characterised in that** at least one electrical signal is emitted in order to actuate a switchable element between the screw (10) and the spindle-nut combination (4, 5).

## Revendications

1. Procédé d'exploitation d'un dispositif d'injection (1) d'une machine de moulage par injection pour le dosage ou l'injection de matière de préférence thermoplastique
et pour la production d'une pression dynamique dans la matière fondue ou pour la production d'une pression de maintien sur la matière fondue,
au moyen d'un dispositif moteur à vis constitué de deux moteurs électriques (6, 7) en liaison électrique de régulation et d'une combinaison vis-écrou (4, 5),
les deux moteurs électriques (6, 7) pouvant être actionnés en même temps dans le même sens de rotation ou en sens contraire,
les deux moteurs électriques (6, 7), de préférence des servomoteurs, étant actionnés en sens de rotation contraire pour l'injection de la matière thermoplastique, ou
les deux moteurs électriques (6, 7) étant actionnés dans le même sens de rotation pour la production d'une pression dynamique dans la matière fondue ou d'une pression de maintien sur la matière fondue,
une différence de vitesses de rotation étant établie au moyen d'au moins un signal électrique de réaction,
un système linéaire de mesure de déplacements étant utilisé comme signal supplémentaire de réaction.

2. Procédé selon la revendication 1, **caractérisé par le fait que** comme signal de réaction est employée une pression ou une vitesse ou une accélération.

3. Procédé selon l'une des revendications 1 et 2, **caractérisé par le fait que** le ou les signaux de réaction sont traités au moyen d'au moins une commande programmable.

4. Procédé selon l'une des revendications 1 à 3, **caractérisé par le fait que** les deux moteurs électriques (6, 7) ont lors du dosage de la matière plastique un sens de rotation inverse du sens de rotation qu'ils ont lors de la production de la pression de maintien sur la matière fondue.

5. Procédé selon l'une des revendications 1 à 4, **caractérisé par le fait que** le sens de rotation de la vis (10) lors de l'opération d'injection est inverse du sens de rotation de celle-ci lors de l'opération de dosage.

6. Procédé selon au moins une des revendications 1 à 5, **caractérisé par le fait qu'**au moins un signal électrique est émis pour manoeuvrer un élément commutable entre la vis (10) et la combinaison vis-écrou (4, 5).
